# EUROPÄISCHE PATENTSCHRIFT

(11) **EP 3 381 733 B1**
(45) Veröffentlichungstag und Bekanntmachung des Hinweises auf die Patenterteilung: **05.08.2020**
(21) Anmeldenummer: 18163868.5
(22) Anmeldetag: 26.03.2018
(51) Int. Cl.: B60K 37/04, B60R 11/02

(54) **VORRICHTUNG, INSBESONDERE ZUM EINBAU IN EIN KRAFTFAHRZEUG, MIT EINEM AUFNAHMESCHACHT**
DEVICE WITH A STORAGE SHAFT FOR INSTALLATION IN A MOTOR VEHICLE IN PARTICULAR
DISPOSITIF, EN PARTICULIER DESTINÉ À ÊTRE MONTÉ DANS UN VÉHICULE AUTOMOBILE, POURVU D'UNE CAVITÉ DE RÉCEPTION

(30) Priorität: 01.04.2017 DE 102017003193
(43) Veröffentlichungstag der Anmeldung: 03.10.2018
(73) Patentinhaber: MAN Truck & Bus SE, 80995 München (DE)
(72) Erfinder: Jochum, Christina, 85716 Unterschleißheim (DE); Müller, Matthias, 81249 München (DE)
(74) Vertreter: v. Bezold & Partner Patentanwälte - PartG mbB

(56) Entgegenhaltungen:
- EP-A1- 1 790 529
- EP-A1- 2 987 672
- GB-A- 2 422 728
- US-B1- 6 709 041

## Beschreibung

Die Erfindung betrifft eine Vorrichtung, insbesondere zum Einbau in ein Kraftfahrzeug, mit einem Aufnahmeschacht nach dem Oberbegriff des Patentanspruchs 1 sowie ein Fahrzeug, insbesondere ein Nutzfahrzeug mit der Vorrichtung nach Patentanspruch 9.

Zum allgemeinen Stand der Technik kann zunächst auf die US 6 709 041 B1 verwiesen werden, die eine Instrumententafel-Baueinheit für die Verwendung in einem Fahrzeug offenbart, umfassend eine zentrale Stapel-Baueinheit, die auf einem Fahrzeugboden montiert ist, wobei die zentrale Stapel-Baueinheit eine Vielzahl von Servicemodulen aufnehmen kann, wobei die Instrumententafel-Baueinheit weiterhin ein Paneel umfasst, das einen im Wesentlichen symmetrischen oberen Haubenteil aufweist, der einen zentral angeordneten, ausgeschnittenen Bereich umschließt, und wobei die zentrale Stapel-Baueinheit in dem zentralen ausgeschnittenen Bereich angeordnet ist. Ferner kann zum allgemeinen Stand der Technik auf die GB 2 422 728 A und die EP 1 790 529 A1 verwiesen werden.

Es ist allgemein bekannt in Armaturenbrettern von Fahrzeugen, in Schalttafeln, etc. Aufnahmeschächte vorzusehen für einen Einbau elektrischer Module, beispielsweise von Steuergeräten, Mediageräten, etc.

Solche Aufnahmeschächte sind regelmäßig quaderförmig gestaltet mit bestimmter Schachtbreite, Schachthöhe und Schachttiefe sowie mit einer rechteckigen offenen Einbauseite und meist offenen Rückseite. Ein Aufnahmeschacht ist damit aus einer Schachtunterwand, einer Schachtoberwand und zwei gegenüberliegenden Schachtseitenwänden gebildet. Die Größe eines solchen Aufnahmeschachts ist für einen universellen Einsatz regelmäßig genormt, beispielsweise als DIN-Schacht mit einer Schachtbreite von 180 mm, einer Schachthöhe von 50 mm und einer den Einbaugegebenheiten angepassten Schachtiefe. Für einen Schachteinbau vorgesehene Module weisen regelmäßig ein Modulgehäuse auf, in dem beispielsweise eine Steuerelektronik enthalten ist.

Ein solches Modulgehäuse ist im gesamten Schachtvolumen oder eines Teils des Schachtvolumens in den Aufnahmeschacht eingesetzt und dort mittels Halteelementen fixiert und gehalten.

Die für einen Einbau in einen Aufnahmeschacht vorgesehenen elektrischen Module können auch in einer Kombination aus zwei übereinanderliegenden Modulen mit flachen Modulgehäusen in einem Aufnahmeschacht eingebaut werden. Beispielsweise können dies zwei Steuergeräte-Module für zwei unterschiedliche Steuerfunktionen sein. Mit zwei solchen Steuergerät-Modulen ist dann das gesamte Schachtvolumen belegt. Je nach den Gegebenheiten, beispielsweise je nach dem Ausrüstungsgrad eines Kraftfahrzeugs mit Steuerfunktionen, beispielsweise mit Fahrerassistenzsystemen kann bei geringerer Ausrüstung auch nur ein Steuergerät-Modul für einen Einbau in einen Aufnahmeschacht erforderlich sein. Damit bleibt eine untere oder obere Hälfte eines Aufnahmeschachts ständig frei oder steht für eine spätere weitere Aufrüstung zur Verfügung. Gerade für den Fall einer nur hälftigen Belegung des Aufnahmeschachts mit nur einem Modul bzw. einem Modulgehäuse besteht das Problem dieses stabil im Aufnahmeschacht abzustützen und zu fixieren. Das Einbauproblem bei einem Einzeleinbau oder beim Einbau einer Kombination aus zwei Modulen und/oder für unterschiedliche Modulfunktionen ist mit entsprechend unterschiedlich gestalteten Modulgehäusen lösbar. Die Entwicklung und Herstellung unterschiedlicher Modulgehäuse, insbesondere als Spritzgussteile aus Kunststoff ist jedoch aufwendig und kostenintensiv, insbesondere mit dem Verbau einer Vielzahl von elektrischen Modulen mit ihren Modulgehäusen in Aufnahmeschächten im Serien-Fahrzeugbau.

Aufgabe der Erfindung ist es daher, eine Vorrichtung vorzuschlagen, bei der die verbaubaren Modulgehäuse in Serie kostengünstig herstellbar sind und gleichzeitig sicher und stabil bei einer Einzelmontage oder in Kombination aus zwei gleichen Modulgehäusen in einem Aufnahmeschacht verbaubar sind.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Vorrichtung, insbesondere zum Einbau in ein Kraftfahrzeug, vorgeschlagen, mit einem Aufnahmeschacht und wenigstens einem, insbesondere zwei, in den Aufnahmeschacht eingebauten Modulgehäuse, wobei in dem Aufnahmeschacht wahlweise ein einziges Modulgehäuse oder eine Kombination aus zwei Modulgehäusen verbaubar ist, wobei der Aufnahmeschacht quaderförmig gestaltet ist mit bestimmter Schachtbreite, Schachthöhe und Schachttiefe, mit einer rechteckigen, offenen Einbauseite entsprechend der Schachtbreite und Schachthöhe sowie mit einer Schacht-Unterwand, einer Schacht-Oberwand und zwei gegenüberliegenden Schacht-Seitenwänden. Erfindungsgemäß sind die in dem Aufnahmeschacht verbaubaren bzw. verbauten Modulgehäuse baugleich ausgebildet.

Damit können vorteilhaft jeweils gleiche, kostengünstig herstellbare Modulgehäuse für einen Einzeleinbau oder für einen Doppeleinbau im Aufnahmeschacht verwendet werden.

Bei einer erfindungsgemäßen Vorrichtung weist jedes verbaubare Modulgehäuse einen in seiner Grundform quaderförmigen, insbesondere flachen, Gehäusekörper auf, wobei die Gehäusebreite jeweils gleich der Schachtbreite ist und zwei deckungsgleich übereinanderliegend kombinierte Modulgehäuse eine Gesamthöhe gleich der Schachthöhe haben. Dadurch wird bei einem kombinierten Einbau aus zwei Modulgehäusen der gesamte Schachteinschub ausgenützt und bei einem Einzeleinbau die untere oder obere Hälfte des Aufnahmeschachts. Es versteht sich, dass die Gehäusebreite und entsprechend die Gehäusehöhen kombinierter Modulgehäuse mit geringer Toleranz kleiner sind als die zugeordnete Schachtbreite und Schachthöhe, um einen Einschub zu ermöglichen.

Weiter ragen von einer für die übereinanderliegende Kombination vorgesehenen Anlagefläche eines Modulgehäuses in Seitenbereichen, jeweils innerhalb der Schachttiefe und in Schachttiefenrichtung gegeneinander versetzt, wenigstens zwei seitlich gegenüberliegende Stützstege rechtwinklig von der Anlagefläche ab. Die Höhe der Stützstege ist so gewählt, dass die dortige Gehäuse-Gesamthöhe aus der Höhe des Gehäusekörpers und der Höhe der Stützstege gleich der Schachthöhe ist.

Des Weiteren ist zudem jedem Stützsteg seitlich gegenüberliegend im Gehäusekörper eine in einer Negativform des Stützstegs gestaltete Ausnehmung zugeordnet. Damit können bei einer Kombination von zwei Modulgehäusen die beiden Gehäusekörper, von denen einer um eine Längsachse um 180° gedreht wurde, mit aufeinander zugerichteten Stützstegen zusammengeführt werden, wobei die Stützstege des einen Gehäusekörpers in zugeordnete Ausnehmungen des anderen Gehäusekörpers eingreifen. Die so zusammengesetzte Kombination kann dann in den Aufnahmeschacht eingesetzt und verbaut werden.

Beim Einbau nur eines Modulgehäuses in einen unteren oder oberen Aufnahmebereich des Aufnahmeschachts liegen vorzugsweise die Stützstege dieses einen Modulgehäuses an der jeweils gegenüberliegenden Schachtwand als Schacht-Oberwand oder Schacht-Unterwand zur Abstützung und Fixierung in Richtung der Schachthöhe an.

In solche jeweils gleiche Modulgehäuse können vorzugsweise unterschiedliche elektronische Baugruppen, beispielsweise zur Ausbildung unterschiedlicher Steuergeräte eingebaut werden.

In einer vorteilhaften Weiterbildung können die bei einem Doppeleinbau aneinander liegenden Gehäusewände als Anlageflächen von zwei Gehäusekörpern jeweils eine zugeordnete Struktur aus erhabenen Strukturelementen und tieferen Strukturelementen aufweisen, die im kombinierten Zustand zumindest zum Teil formschlüssig insbesondere für eine gegenseitige Fixierung ineinander greifen. Die Strukturelemente können dabei quadratförmig flach ausgebildet sein. Damit sind die Strukturen einfach bei einem Kunststoffgehäuse im Spritzgussverfahren herstellbar. Für eine gute Abstützung und ein formschlüssiges Ineinandergreifen sollen auch die Stützstege ebenso wie die zugeordneten Ausnehmungen einen rechtwinkeligen, insbesondere quadratisch, gleichen Querschnitt aufweisen. Zudem können Stützstege und Ausnehmungen unmittelbar nebeneinander angeordnet etwa im mittleren Tiefenbereich eines Aufnahmeschachts angeordnet sein.

Weiter bevorzugt sind im Aufnahmeschacht und an den Modulgehäusen bzw. den Gehäusekörpern Halteelemente und Haltegegenelemente, insbesondere Rasteinrichtungen, zur Halterung und Fixierung eines Modulgehäuses oder einer Kombination von zwei Modulgehäusen vorgesehen.

Weiter wird auch ein Fahrzeug, insbesondere ein Nutzfahrzeug, mit der erfindungsgemäßen Vorrichtung beansprucht. Die sich durch das erfindungsgemäße Fahrzeug ergebenden Vorteile sind identisch mit den bereits gewürdigten Vorteilen der erfindungsgemäßen Vorrichtung, so dass diese an dieser Stelle nicht wiederholt werden. Vorzugsweise ist der Aufnahmeschacht bzw. ein den Aufnahmeschacht bildendes, insbesondere dünnwandiges, Aufnahmeschacht-Element dabei in eine Mittelkonsole oder in ein Amaturenbrett bzw. in eine Instrumententafel des Fahrzeugs eingebaut.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: ein Modulgehäuse eines elektrischen Moduls in perspektivischer Darstellung,
- Figur 2: zwei Modulgehäuse kurz vor ihrer Zusammenführung und Kombination,
- Figur 3: eine Modulgehäuseeinheit aus zwei kombinierten Modulgehäusen entsprechend Figur 2,
- Figur 4: einen Aufnahmeschacht mit einem im unteren Bereich verbauten Modulgehäuse,
- Figur 5: einen Aufnahmeschacht mit einem im oberen Bereich verbauten Modulgehäuse, und
- Figur 6: einen Aufnahmeschacht mit einer verbauten Modulgehäuseeinheit aus zwei Modulgehäusen.

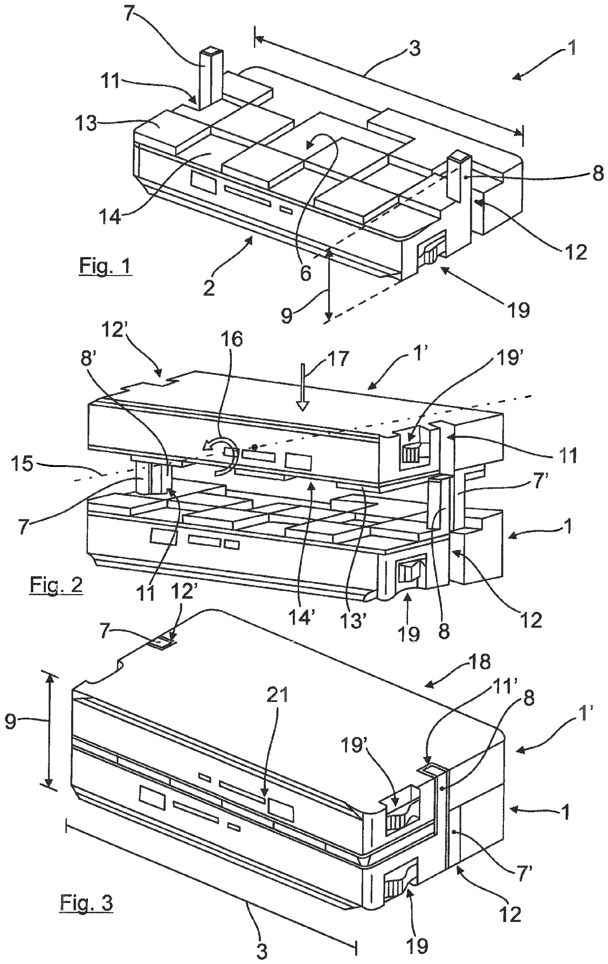

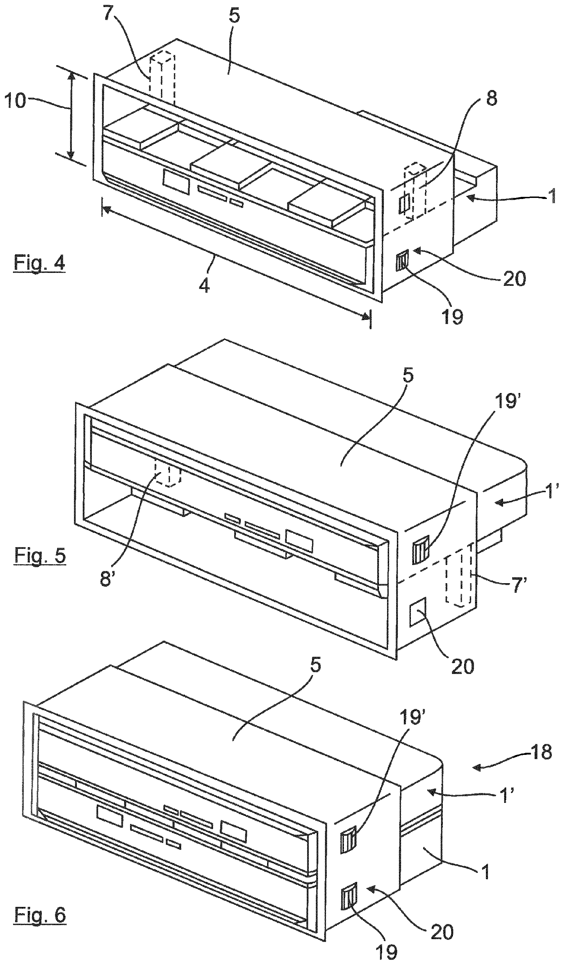

In Figur 1 ist ein Modulgehäuse 1 eines elektrischen Moduls beispielsweise eines Steuergeräts dargestellt. Das Modulgehäuse 1 weist einen in der Grundform quaderförmigen flachen Gehäusekörper 2 auf, dessen Gehäusebreite 3 der Schachtbreite 4 eines Aufnahmeschachts 5 (siehe Figuren 4 bis 6) entspricht. Von einer (oberen) Anlagefläche 6 des Gehäusekörpers 2 ragen in gegenüberliegenden Seitenbereichen (innerhalb der Schachttiefenerstreckung) gegeneinander versetzt angeordnete Stützstege 7, 8 etwa rechtwinkelig nach oben ab. Die dortige Gehäuse-Gesamthöhe 9 aus der Höhe des Gehäusekörpers 2 und der davon abragenden Höhe der Stützstege 7, 8 entspricht der Schachthöhe 10.

Den Stützstegen 7, 8 ist jeweils seitlich gegenüberliegend im Gehäusekörper eine in einer Negativform des jeweiligen Stützstegs 7, 8 gestaltete Ausnehmung 11, 12 zugeordnet.

Die Anlagefläche 6 ist mit einer Struktur aus quadratischen erhabenen Strukturelementen 13 und vertieften Strukturelementen 14 versehen, dergestalt, dass Strukturelemente 13', 14' nach einer Drehung des oberen Modulgehäuses 1' um eine Längsachse 15 von 180° (Doppelpfeil 16) nach einer Zusammenführung (Pfeil 17) mit Strukturelementen 13, 14 des unteren Modulgehäuses 1 ineinander greifen.

Wie aus Figur 2 ersichtlich greifen der Stützsteg 7 und der Stützsteg 8 des unteren Modulgehäuses 1 in die zugeordneten Ausnehmungen 11' und 12' des gedrehten oberen Modulgehäuses 1' ein. Entsprechend greifen auch die Stützstege 7' und 8' des gedrehten oberen Modulgehäuses 1' in die zugeordneten Ausnehmungen 11 und 12 des unteren Modulgehäuses 1 ein. Die Stützstege und Ausnehmungen, beispielsweise der Stützsteg 8 und die Ausnehmung 12 weisen jeweils einen gleichen quadratischen Querschnitt auf und liegen hier unmittelbar nebeneinander.

In Figur 3 ist der sich aus Figur 2 ergebende zusammengeführte Zustand der beiden Modulgehäuse 1, 1' dargestellt, wodurch eine Modulgehäuseeinheit 18 als zusammengesteckte Kombination der beiden Modulgehäuse 1, 1' gebildet ist mit einer Gehäusebreite 3 entsprechend der Schachtbreite 4 und einer Gehäusegesamthöhe 9 entsprechend der Schachthöhe 10. In der vorliegenden Ausführungsform handelt es sich hier um einen genormten Aufnahmeschacht 5 als sogenannter DIN-Schacht mit einer Schachtbreite 4 von 180 mm und einer Schachthöhe 10 von 50 mm.

Wie weiter aus den Figuren 1 bis 3 ersichtlich, sind jeweils beidseitig an den Modulgehäusen 1, 1' Federzungen 19, 19' als Rastelemente von Rasteinrichtungen angebracht, die mit zugeordneten Rastausnehmungen 20 am Aufnahmeschacht 5 zusammenwirken, wobei die Rastausnehmungen 20 jeweils an den Seitenwänden des Aufnahmeschachts 5 höhenversetzt entsprechend der Montagelage der Modulgehäuse 1, 1' angebracht sind.

An der Frontseite der Modulgehäuse 1, 1' können zudem Funktionselemente 21, beispielsweise Schalter, Taster, Anzeiger, etc. oder Ausschnitte für solche Elemente 21 angebracht sein, die, wie aus Figur 3 ersichtlich, durch die umgedrehte Montage des oberen Modulgehäuses 1' versetzt und umgedreht bezüglich des unteren Modulgehäuses 1 liegen.

In den Figuren 4 bis 6 sind die drei möglichen Einbaulagen für ein oder zwei Modulgehäuse 1, 1' im Aufnahmeschacht 5 dargestellt:
In Figur 4 ist das Modulgehäuse 1 mit nach oben gerichteten Stützstegen 7, 8 in der unteren Hälfte des Aufnahmeschachts 5 verbaut. Dabei stützen sich die Stützstege 7, 8 für eine feste und sichere Montage von innen an der Oberwand des Aufnahmeschachts 5 ab. Zudem sind die Federzungen 19 in die Rastausnehmungen 20 des unteren Schachtbereichs eingerastet.

In Figur 5 ist in der oberen Schachthälfte das Modulgehäuse 1' mit nach unten gerichteten Stützstegen 7', 8' verbaut, wobei sich die Stützstege 7', 8' innen auf der Unterwand des Aufnahmeschachts 5 abstützen. Zudem sind beidseitig die Federzungen 19' in die zugeordneten oberen Rastausnehmungen eingerastet.

In Figur 6 ist die zusammengesetzte Modulgehäuseeinheit 18 entsprechend Figur 3 im Aufnahmeschacht 5 verbaut, wobei der gesamte Aufnahmeraum ausgefüllt ist und die Federzungen 19, 19' in die zugeordneten Rastausnehmungen 20 des Aufnahmeschachts 5 eingerastet sind.

### Bezugszeichenliste

- 1, 1': Modulgehäuse
- 2: Gehäusekörper
- 3: Gehäusebreite
- 4: Schachtbreite
- 5: Aufnahmeschacht
- 6: Anlagefläche
- 7, 7': Stützsteg
- 8, 8': Stützsteg
- 9: Gehäuse-Gesamthöhe
- 10: Schachthöhe
- 11, 11': Ausnehmung
- 12, 12': Ausnehmung
- 13, 13': erhabenes Strukturelement
- 14, 14': vertieftes Strukturelement
- 15: Längsachse
- 16: Drehpfeil
- 17: Pfeil
- 18: Modulgehäuseeinheit
- 19, 19': Federzunge
- 20: Rastausnehmung
- 21: Funktionselemente

## Patentansprüche

1. Vorrichtung, insbesondere zum Einbau in ein Kraftfahrzeug, mit einem Aufnahmeschacht (5) und wenigstens einem, insbesondere zwei, in den Aufnahmeschacht (5) eingebauten Modulgehäuse (1 oder 1'), wobei in dem Aufnahmeschacht (5) das wenigstens eine Modulgehäuse (1 oder 1') wahlweise als ein einziges Modulgehäuse (1 oder 1') oder als eine Kombination aus zwei Modulgehäusen (1 und 1') verbaubar ist, wobei der Aufnahmeschacht (5) quaderförmig gestaltet ist mit bestimmter Schachtbreite (4), Schachthöhe (10) und Schachttiefe, mit einer rechteckigen, offenen Einbauseite entsprechend der Schachtbreite (4) und Schachthöhe (10) sowie mit einer Schacht-Unterwand, einer Schacht-Oberwand und zwei gegenüberliegenden Schacht-Seitenwänden, wobei das wenigstens eine Modulgehäuse (1, 1') einen in der Grundform quaderförmigen, insbesondere flachen, Gehäusekörper (2) aufweist, wobei die Gehäusebreite (3) gleich der Schachtbreite (4) ist und zwei des wenigstens einen Modulgehäuse (1, 1') deckungsgleich übereinanderliegend kombiniert eine Gesamthöhe (9) gleich der Schachthöhe (10) haben, **dadurch gekennzeichnet,**
**dass** jedes des wenigstens einen Modulgehäuse (1, 1') baugleich ausgebildet ist,
**dass** von der jeweiligen im kombinierten übereinanderliegenden Fall zugeordneten Anlagefläche (6) beider Grundkörper (2) in Seitenbereichen jeweils innerhalb der Schachttiefe und in Schachttiefenrichtung versetzt, wenigstens zwei seitlich gegenüberliegende Stützstege (7, 8; 7', 8') vorgesehen sind, die rechtwinklig von der Anlagefläche (6) abragen mit einer dortigen Gehäuse-Gesamthöhe (9) aus der Höhe des Gehäusekörpers und der Höhe der Stützstege (7, 8; 7', 8'), die gleich der Schachthöhe (10) ist, und
**dass** jedem Stützsteg (7, 8; 7', 8') seitlich gegenüberliegend im Gehäusekörper (2) eine in einer Negativform des Stützstegs (7, 8; 7', 8') gestaltete Ausnehmung (11, 12; 11', 12') zugeordnet ist, so dass bei kombinierten Modulgehäusen (1, 1') die Stützstege (7, 8 bzw. 7', 8') des einen Gehäusekörpers (2) in zugeordnete Ausnehmungen (12', 11' bzw. 12, 11) des anderen Gehäusekörpers (2) eingreifen.

2. Vorrichtung nach Anspruch 1, **dadurch gekennzeichnet, dass** der Aufnahmeschacht (5) eine Schachtbreite (4) von 180 mm und eine Schachthöhe (10) von 50 mm aufweist, wobei bevorzugt vorgesehen ist, dass der Aufnahmeschacht (5) eine den Gegebenheiten einer Einbausituation angepasste Schachttiefe aufweist und/oder als genormter DIN-Schacht ausgebildet ist.

3. Vorrichtung nach Anspruch 1 oder 2, **dadurch gekennzeichnet, dass** die aneinander liegenden Gehäusewände als Anlageflächen (6) von zwei Gehäusekörpern (2) jeweils eine zugeordnete Struktur aus erhabenen Strukturelementen (13, 13') und vertieften Strukturelementen (14, 14') aufweisen, die im kombinierten Zustand zumindest zum Teil formschlüssig für eine gegenseitige Fixierung ineinandergreifen.

4. Vorrichtung nach Anspruch 3, **dadurch gekennzeichnet, dass** die Strukturelemente (13, 13', 14, 14') quadratförmig flach ausgebildet sind.

5. Vorrichtung nach einem der Ansprüche 1 bis 3, **dadurch gekennzeichnet, dass** die Stützstege (7, 8; 7', 8') ebenso wie die zugeordneten Ausnehmungen (11, 12; 11', 12') einen rechtwinkeligen, insbesondere quadratischen, gleichen Querschnitt aufweisen und Stützstege (7, 8; 7', 8') und Ausnehmungen (11, 12; 11', 12') unmittelbar nebeneinander angeordnet sind.

6. Vorrichtung nach einem der Ansprüche 1 bis 5, **dadurch gekennzeichnet, dass** beim Einbau nur eines des wenigstens einen Modulgehäuses (1 oder 1') in einem unteren oder oberen Aufnahmebereich des Aufnahmeschachts (5) die Stützstege (7, 8 oder 7', 8') dieses einen Modulgehäuses (1 oder 1') an der jeweils gegenüberliegenden Schachtwand als Schacht-Oberwand oder Schacht-Unterwand zur Abstützung und Fixierung in Richtung der Schachthöhe (10) anliegen.

7. Vorrichtung nach einem der Ansprüche 1 bis 6, **dadurch gekennzeichnet, dass** im wenigstens einen Modulgehäuse (1, 1') elektrische und/oder elektronische Elemente zur Ausbildung von Steuergeräten enthalten sind.

8. Vorrichtung nach einem der Ansprüche 1 bis 7, **dadurch gekennzeichnet, dass** im Aufnahmeschacht (5) und am wenigstens einen Modulgehäuse (1, 1'), insbesondere am Gehäusekörper (2) des Modulgehäuses (1, 1'), Halteelemente und Haltegegenelemente, insbesondere Rasteinrichtungen (19, 20), zur Halterung und Fixierung des Modulgehäuses (1 oder 1') oder der Kombination von Modulgehäusen (1 und 1') vorgesehen sind.

9. Fahrzeug, insbesondere Nutzfahrzeug mit einer Vorrichtung nach einem der vorhergehenden Ansprüche.

## Claims

1. An apparatus, in particular for mounting in a motor vehicle, having a receiving slot (5) and at least one, in particular two, module housing(s) (1 or 1') mounted in the receiving slot (5), wherein the at least one module housing (1 or 1') is able to be installed selectively as a single module housing (1 or 1') or as a combination of two module housings (1 and 1') in the receiving slot (5), wherein the receiving slot (5) is designed in a cuboidal manner with a defined slot width (4), slot height (10) and slot depth, with a rectangular, open mounting side corresponding to the slot width (4) and slot height (10) and with a slot bottom wall, a slot top wall and two opposite slot side walls, wherein the at least one module housing (1, 1') has a housing body (2) of cuboidal, in particular slimline, basic shape, wherein the housing width (3) is equal to the slot width (4) and two of the at least one module housing (1, 1') have, in combination in a manner located congruently one on top of the other, an overall height (9) equal to the slot height (10), **characterized**
**in that** each of the at least one module housing (1, 1') is identical in construction,
**in that** at least two supporting bars (7, 8; 7', 8') that are located laterally opposite one another are provided in lateral regions, in a manner offset in each case within the slot depth and in the slot depth direction from the respective bearing face (6), assigned to one another in the combined case located one on top of the other, of the two basic bodies (2), said supporting bars (7, 8; 7', 8') projecting at right angles away from the bearing face (6) with a local housing overall height (9) made up of the height of the housing body and the height of the supporting bars (7, 8; 7', 8'), which is equal to the slot height (10), and
**in that** each supporting bar (7, 8; 7', 8') is assigned, in a laterally opposite manner in the housing body (2), a recess (11, 12; 11', 12') designed in a negative form of the supporting bar (7, 8; 7', 8'), such that, in the case of combined module housings (1, 1'), the supporting bars (7, 8 and 7', 8', respectively) of one housing body (2) engage in associated recesses (12', 11' and 12, 11, respectively) of the other housing body (2).

2. The apparatus according to Claim 1, **characterized in that** the receiving slot (5) has a slot width (4) of 180 mm and a slot height (10) of 50 mm, wherein provision is preferably made for the receiving slot (5) to have a slot depth adapted to the conditions of a mounting situation and/or to be configured as a standard DIN slot.

3. The apparatus according to Claim 1 or 2, **characterized in that** the housing walls resting against one another each have, as bearing faces (6) of two housing bodies (2), an associated structure made up of raised structural elements (13, 13') and recessed structural elements (14, 14'), which , in the combined state, engage in one another at least partially in a form-fitting manner for mutual fixing.

4. The apparatus according to Claim 3, **characterized in that** the structural elements (13, 13', 14, 14') are configured in a flat square manner.

5. The apparatus according to one of Claims 1 to 3, **characterized in that** the supporting bars (7, 8; 7', 8') and also the associated recesses (11, 12; 11', 12') have an identical rectangular, in particular square, cross section, and the supporting bars (7, 8; 7', 8') and recesses (11, 12; 11', 12') are arranged immediately next to one another.

6. The apparatus according to one of Claims 1 to 5, **characterized in that**, when only one of the at least one module housing (1 or 1') is mounted in a lower or upper receiving region of the receiving slot (5), the supporting bars (7, 8 or 7', 8') of this one module housing (1 or 1') bear against the respectively opposite slot wall as slot top wall or slot bottom wall for supporting and fixing in the direction of the slot height (10).

7. The apparatus according to one of Claims 1 to 6, **characterized in that** electrical and/or electronic elements for forming control units are contained in at least one module housing (1, 1').

8. The apparatus according to one of Claims 1 to 7, **characterized in that** retaining elements and counterpart retaining elements, in particular latching devices (19, 20), for holding and fixing the module housing (1 or 1') or the combination of module housings (1 and 1') are provided in the receiving slot (5) and on at least one module housing (1, 1'), in particular on the housing body (2) of the module housing (1, 1').

9. A vehicle, in particular commercial vehicle, having an apparatus according to one of the preceding claims.

## Revendications

1. Dispositif, en particulier pour l'installation dans un véhicule automobile, comprenant un conduit de réception (5) et au moins un, en particulier deux, boîtiers modulaires (1 ou 1'), installé dans le conduit de réception (5), l'au moins un boîtier modulaire (1 ou 1') dans le conduit de réception (5) pouvant être monté de manière sélective en tant que boîtier modulaire unique (1 ou 1') ou en tant que combinaison de deux boîtiers modulaires (1 et 1'), le conduit de réception (5) étant configuré sous forme parallélépipédique avec une largeur de conduit (4), une hauteur de conduit (10) et une profondeur de conduit déterminées, avec un côté d'installation ouvert rectangulaire correspondant à la largeur de conduit (4) et à la hauteur de conduit (10) ainsi qu'avec une paroi inférieure de conduit, une paroi supérieure de conduit et deux parois latérales de conduit opposées, l'au moins un boîtier modulaire (1, 1') présentant un corps de boîtier (2) de forme de base parallélépipédique, en particulier plat, la largeur de boîtier (3) étant égale à la largeur de conduit (4) et deux des au moins un boîtier modulaire (1, 1') combinés en coïncidence l'un sur l'autre ayant une hauteur totale (9) égale à la hauteur de conduit (10),
**caractérisé en ce que**
chacun des au moins un boîtier modulaire (1, 1') est réalisé avec une construction identique,
**en ce qu'**au moins deux nervures de support (7, 8 ; 7', 8') latéralement opposées sont prévues de manière décalée depuis la surface d'appui (6) associée respective des deux corps de base (2), au cas où ils sont combinés l'un au-dessus de l'autre, dans des régions latérales à chaque fois à l'intérieur de la profondeur de conduit et dans la direction de la profondeur de conduit, lesquelles nervures de support font saillie à angle droit depuis la surface d'appui (6) avec une hauteur totale de boîtier (9) à cet endroit constituée de la hauteur du corps de boîtier et de la hauteur des nervures de support (7, 8 ; 7', 8'), qui est égale à la hauteur de conduit (10), et
**en ce qu'**un évidement (11, 12 ; 11', 12') configuré avec une forme négative de la nervure de support (7, 8 ; 7', 8') est associé de manière latéralement opposée à chaque nervure de support (7, 8 ; 7', 8') dans le corps de boîtier (2), de telle sorte que dans le cas de boîtiers modulaires combinés (1, 1'), les nervures de support (7, 8, respectivement 7', 8') de l'un des corps de boîtier (2) s'engagent dans des évidements associés (12', 11', respectivement 12, 11) de l'autre corps de boîtier (2).

2. Dispositif selon la revendication 1, **caractérisé en ce que** le conduit de réception (5) présente une largeur de conduit (4) de 180 mm et une hauteur de conduit (10) de 50 mm, le conduit de réception (5) étant de préférence prévu pour présenter une profondeur de conduit adaptée aux données d'une situation d'installation et/ou être réalisé sous forme de conduit conforme à une norme DIN.

3. Dispositif selon la revendication 1 ou 2, **caractérisé en ce que** les parois de boîtier situées l'une contre l'autre en tant que surfaces d'appui (6) de deux corps de boîtier (2) présentent à chaque fois une structure associée constituée d'éléments structurels rehaussés (13, 13') et d'éléments structurels renfoncés (14, 14'), qui, dans l'état combiné, viennent en prise les uns dans les autres au moins en partie par engagement par correspondance de formes en vue d'une fixation mutuelle.

4. Dispositif selon la revendication 3, **caractérisé en ce que** les éléments structurels (13, 13', 14, 14') sont réalisés sous forme plate quadrilatérale.

5. Dispositif selon l'une quelconque des revendications 1 à 3, **caractérisé en ce que** les nervures de support (7, 8 ; 7', 8') ainsi que les évidements associés (11, 12 ; 11', 12') présentent une section transversale rectangulaire, en particulier carrée, identique et les nervures de support (7, 8 ; 7', 8') et les évidements (11, 12 ; 11', 12') sont disposés directement les uns à côté des autres.

6. Dispositif selon l'une quelconque des revendications 1 à 5, **caractérisé en ce que** lors de l'installation de seulement l'un des au moins un boîtier modulaire (1 ou 1') dans une région de réception inférieure ou supérieure du conduit de réception (5), les nervures de support (7, 8 ou 7', 8') de ce boîtier modulaire (1 ou 1') s'appliquent contre la paroi de conduit respectivement opposée en tant que paroi supérieure de conduit ou paroi inférieure de conduit pour le support et la fixation dans la direction de la hauteur de conduit (10).

7. Dispositif selon l'une quelconque des revendications 1 à 6, **caractérisé en ce que** dans au moins un boîtier modulaire (1, 1') sont incorporés des éléments électriques et/ou électroniques pour réaliser des appareils de commande.

8. Dispositif selon l'une quelconque des revendications 1 à 7, **caractérisé en ce que** dans le conduit de réception (5) et au niveau d'au moins un boîtier modulaire (1, 1'), en particulier au niveau du corps de boîtier (2) du boîtier modulaire (1, 1'), sont prévus des éléments de retenue et des éléments conjugués de retenue, en particulier des dispositifs d'encliquetage (19, 20) pour retenir et fixer le boîtier modulaire (1 ou 1') ou la combinaison de boîtiers modulaires (1 et 1').

9. Véhicule, en particulier véhicule utilitaire, comprenant un dispositif selon l'une quelconque des revendications précédentes.
